# EUROPEAN PATENT SPECIFICATION

(11) **EP 4 556 078 B1**
(45) Date of publication and mention of the grant of the patent: **13.05.2026**
(21) Application number: 23872102.1
(22) Date of filing: 21.09.2023
(51) Int. Cl.: A62C 3/00, F24F 7/04, H04N 7/18, G02B 23/24

(54) **CLOSED-SPACE MONITORING DEVICE**
ÜBERWACHUNGSVORRICHTUNG IM GESCHLOSSENEN RAUM
DISPOSITIF DE SURVEILLANCE D'ESPACE FERMÉ

(30) Priority: 27.09.2022 JP 2022153666
(43) Date of publication of application: 21.05.2025
(73) Proprietor: Agat Co.,Ltd., Tokyo 121-0064 (JP)
(72) Inventor: TAGA, Toshiyuki, Tokyo 121-0064 (JP)
(74) Representative: Mathisen & Macara LLP
(86) International application number: PCT/JP2023/034222
(87) International publication number: WO 2024/070876

(56) References cited:
- WO-A1-2020/263173
- CN-A- 102 085 523
- CN-U- 204 795 428
- CN-U- 215 613 815
- JP-A- 2003 185 357
- JP-A- 2020 521 193
- KR-A- 20060 115 843
- KR-A- 20180 078 376
- KR-B1- 100 446 578

## Description

### Technical Field

The present invention relates to a closed-space monitoring device for confirming the condition of a closed space such as a duct from a remote location using a video or the like.

### Background Art

Patent Document 1 discloses a fire detection system in which a visible light camera is installed in a duct for emitting greasy fumes and the like generated in a kitchen and so on to monitor abnormalities inside the duct from outside via the visible light camera.

In a monitoring system that enables monitoring inside such a duct using a visible light camera, an operator can confirm, through videos captured by the visible light camera, the state of greasy fumes flowing inside the duct, oil adhering to a wall surface of the duct, and oil adhering to a fire damper that is installed near the visible light camera and operable to close the flow path.

In a case where an abnormal amount of greasy fumes accumulates, or where a large amount of oil adheres to the wall surface or the fire damper, inspection including cleaning is carried out, so that a fire can be prevented inside the duct.

A further example of a prior art closed-spaced monitoring device in which a camera can be retratcted from the closed space and closed off by a valve is shown in JP2003 185357.

### Citation List

### Patent Literature

Patent Document 1:JP 2020-521193 A

### Summary of Invention

### Technical Problem

However, in a case where the visible light camera, serving as a monitoring unit, installed in the duct is used for a long period of time in smoke generated in a kitchen and so on, dirt such as oil adheres to a lens of the visible light camera, which makes it difficult to visualize the situation inside the duct.

Further, if a fire breaks out inside the duct, the high-temperature state continues, which may cause damage to an IC chip, a circuit board, and the like of the monitoring unit due to heat. This makes it impossible to continue monitoring in some cases.

Further, if a malfunction occurs in the IC chip, the circuit board, and the like of the monitoring unit and a fire breaks out in the monitoring unit, the fire may spread to flammable dirt near the monitoring unit, which causes a disaster.

An object of the present invention is to provide a closed-space monitoring device that solves the problems described above, prevents dirt from adhering to a lens of a monitoring unit, prevents damage to the monitoring unit due to heating, and prevents a malfunction of the monitoring unit from causing a fire in a closed space.

### Advantageous Effects of Invention

According to the closed-space monitoring device of the present invention, the monitoring unit that monitors the inside of the closed space is advanced into the closed space only when necessary, so that dirt such as oil can be prevented from adhering to the lens of the monitoring unit. Further, a heat shielding portion is provided in the monitoring unit. Thereby, damage to the monitoring unit due to heating is prevented, and even if a fire breaks out in the monitoring unit, dirt in the closed space does not catch fire and a fire does not break out inside the closed space.

### Brief Description of Drawings

FIG. 1 is a diagram illustrating a configuration of a closed-space monitoring device for a duct according to a first example.
FIG. 2 is a diagram illustrating a configuration with a monitoring unit advancing into a duct.
FIG. 3 is a diagram illustrating a configuration of a closed-space monitoring device according to a second example.
FIG. 4 is a diagram illustrating a configuration with a monitoring unit advancing into a duct.

### Description of Embodiments

The present invention will be described in detail with reference to the illustrated examples.

### First Example

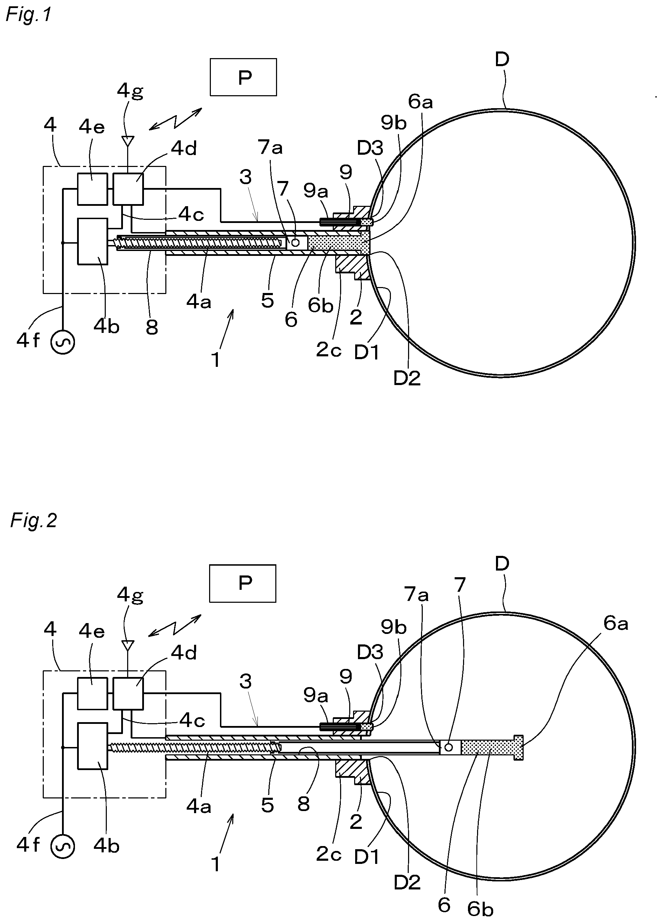

FIG. 1 is a diagram illustrating a configuration of a closed-space monitoring device for a duct according to the first example. FIG. 2 is a diagram illustrating a configuration with a monitoring unit advancing into a duct.

A duct D for which a closed-space monitoring device 1 is installed forms a closed space. The duct D is, for example, installed in a kitchen or the like, and is a flue-gas pipe for exhausting flue gas generated during cooking to the outside, and serves to exhaust high-temperature air that contains oil and the like to the outside. Alternatively, the duct D may be installed in a factory or the like, and may exhaust air containing powder dust and the like.

It is noted that a fire damper (not illustrated) is disposed in each compartment within the duct D. In the event of a fire breaking out in the duct D, the heat from the fire melts a heat-sensitive melting member of the fire damper, which releases the biasing force to rotate a blade of the fire damper by 90 degrees to thereby close a flue gas flow path of the duct D. As described above, the flow path is closed by the fire damper, which prevents the spread of the fire downstream of the fire damper.

In FIG. 1, the duct D has a circular cross sectional shape perpendicular to the smoke flow. However, the duct D may have other appropriate cross sectional shapes such as a rectangular tube, other than a cylindrical shape.

The closed-space monitoring device 1 mainly includes a retaining portion 2 that is fixed to the outer side of a side surface D1 of the duct D and has a through hole 2a, at the center of the retaining portion 2, inserted into an insertion hole D2 of the duct D, a body 3 that is attached inside the through hole 2a and has a cylindrical outer shape, and a fixed control unit 4 that is coupled to a rear end of the body 3.

The retaining portion 2 includes a disk-shaped flange 2b that is externally secured to the side surface D1 with a screw, a rivet, or the like, and a short cylindrical portion 2c that extends outward from the center of the flange 2b, and the through hole 2a is formed inside the short cylindrical portion 2c.

Meanwhile, the body 3 includes a cylindrical metallic guide tube 5 that communicates with the insertion hole D2 and is fixed in the through hole 2a, a heat shielding portion 6 that is slidable forward and backward inside the guide tube 5 and seals an end of the guide tube 5, and a monitoring unit 7 that is also slidable forward and backward inside the guide tube 5 and is disposed continuously behind the heat shielding portion 6. The heat shielding portion 6 is made of a material such as ceramic that has low thermal conductivity. The monitoring unit 7 is configured with a camera that can capture images inside the duct.

The heat shielding portion 6 includes a disk-shaped head 6a that fits into the through hole 2a on the duct D side, and a rod part 6b that extends rearward from the head 6a, has an outer diameter smaller than that of the head 6a, and is slidable relative to the guide tube 5. The monitoring unit 7 is coupled to the rear part of the rod part 6b, and the outer diameter of the monitoring unit 7 substantially matches the outer shape of the rod part 6b. A signal line from the monitoring unit 7 is connected to the control unit 4 via the guide tube 5.

A lens of the monitoring unit 7 is disposed facing the direction of the center line of the duct D such that an image of the fire damper and the like provided inside the duct D can be captured. In the monitoring unit 7, a fish-eye lens capable of capturing an image of a wide angle range may be used, or the monitoring unit 7 may have a zoom function that is operated from the outside. Further, an infrared camera may be used, or a light-emitting unit may be provided near the monitoring unit 7 and the light-emitting unit is turned on in synchronization with image-capturing by the monitoring unit 7.

A movable tube 8 that can move along the longitudinal direction is non-rotatably connected to a rear end 7a of the monitoring unit 7, and a worm gear 4a of the control unit 4, described later, is inserted into the movable tube 8. Inside the movable tube 8, a meshing portion that meshes with helical teeth provided on the worm gear 4a is formed.

The control unit 4 includes the worm gear 4a having teeth carved on the rod-shaped metallic body, a drive unit 4b having an electric motor or the like that rotates the worm gear 4a, and a processing circuit unit 4d that controls the drive unit 4b via wiring 4c and also acquires image data from the monitoring unit 7 via the signal line.

Power from an external power source S such as a commercial power source is supplied via a power line 4f to the drive unit 4b and via the power line 4f and a converter unit 4e to the processing circuit unit 4d. The processing circuit unit 4d is equipped with an antenna 4g that wirelessly transmits observation data including input image data and temperature data to an external device P.

The external device P can be, for example, a tablet PC or a personal computer, and is configured to manage a plurality of closed-space monitoring devices 1. Then, an operator operates the external device P to control the drive unit 4b via the processing circuit unit 4d and so on, so that observation data in the duct D can be acquired.

Further, in the closed-space monitoring device 1, a temperature measurement unit 9 for measuring the temperature inside the duct D can be provided in the body 3 as necessary. In the temperature measurement unit 9, a thermocouple, a thermistor, or the like is used as a temperature sensing element, an end thereof is covered with a protective tube 9a, and further an end thereof is attached to a sealing member 9b made of a non-insulating material and having high thermal conductivity.

The protective tube 9a and the sealing member 9b are inserted into a secondary through hole provided in the flange 2b of the retaining portion 2, different from the through hole 2a, and into a secondary insertion hole D3 provided on the side surface portion D1 of the duct D. An output of the temperature sensing element is connected to the processing circuit unit 4d of the control unit 4 via a signal line, such as a compensation conductor.

The temperature measurement unit 9 is not necessarily essential in the closed-space monitoring device 1, but the processing circuit unit 4d of the control unit 4 can detect the temperature inside the duct D based on the temperature data transmitted by the temperature measurement unit 9 via the signal line, and by acquiring the temperature data from the temperature measurement unit 9 and the image data from the monitoring unit 7 together as observation data, the situation inside the duct D can be found more accurately.

FIG. 1 illustrates a state for a case where the closed-space monitoring device 1 is not driven with the operator not operating the external device P, and the end of the guide tube 5 is sealed by the head 6a of the heat shielding portion 6 and a hermetically sealed state is formed. The heat shielding portion 6 is made of a material that does not easily conduct heat, and the rod part 6b is long. Thus, there is little possibility that the temperature inside the duct D is transmitted to the monitoring unit 7, and therefore, the monitoring unit 7 is not damaged by overheating.

As described above, in order to monitor the situation inside the duct D in a first state in which the heat shielding portion 6 seals the end of the guide tube 5 to form a hermetically sealed state, operation on the external device P is made and so on to move the monitoring unit 7 to achieve a second state in which the monitoring unit 7 advances from the guide tube 5 into the duct D, as illustrated in FIG. 2.

In order to transition to the second state illustrated in FIG. 2 from the first state illustrated in FIG. 1, operation on the external device P is made and so on to drive the drive unit 4b via the processing circuit unit 4d, and to rotate the worm gear 4a. When the worm gear 4a starts rotating, the movable tube 8 including the meshing portion that engages with the teeth moves forward following the movement of the worm gear 4a. The movable tube 8 is provided with a groove or a ridge that engages with the guide tube 5 and so on in order to prevent rotation of the movable tube 8, so that the monitoring unit 7 moves in the front-back direction without rotating.

It is also possible to employ a structure in which the guide tube 5 itself is pivotable relative to the through hole 2a. Such a pivot structure is employed to allow the monitoring unit 7 to capture an image circumferentially in the duct D under control of the processing circuit unit 4d.

Further, the tip position of the teeth 4b of the worm gear 4a is adjusted to an advanced position of the monitoring unit 7 suitable for image-capturing, so that the monitoring unit 7 stops at a predetermined position in the second state illustrated in FIG. 2.

In this state, the monitoring unit 7 captures an image of the inside of the duct D, and also, the temperature measurement unit 9 measures the temperature inside the duct D. The acquired image data and temperature data can be stored in the processing circuit unit 4d, or can be transmitted to the external device P via the antenna 4g.

When observation by the monitoring unit 7 is finished, the drive unit 4b is driven to rotate in the reverse direction via the processing circuit unit 4d, which moves the monitoring unit 7 backward. The heat shielding portion 6 is then housed in the guide tube 5, and the head 6a of the heat shielding portion 6 seals an end of the through hole 2a, returning to the first state. At this time, the head 6a is engaged with the end of the guide tube 5, and therefore, the monitoring unit 7 does not move backward any further inside the guide tube 5.

As described above, by controlling the drive unit 4b of the control unit 4, it is possible to move the monitoring unit 7 together with the heat shielding portion 6 from the first state in which the heat shielding portion 6 hermetically seals the end of the guide tube 5 to the second state in which the monitoring unit 7 advances from the guide tube 5 into the duct D, or, alternatively, to move the monitoring unit 7 together with the heat shielding portion 6 from the second state to the first state.

Even in the first state, that is**,** when the device is not driven, the temperature measurement unit 9 can measure the temperature inside the duct D, and the acquired temperature data can be accumulated in the processing circuit unit 4d**,** or can be periodically transmitted to the external device P.

Alternatively, in a case where the temperature data inside the duct D shows an abnormal value in the first state, the processing circuit unit 4d can output an alarm to the external device P, or the state can automatically transition to the second state from the first state to acquire image data with the monitoring unit 7.

In the first state, unless the temperature data from the temperature measurement unit 9 has an abnormal value, there is no need to transition to the second state, but periodic monitoring may be performed. For example, the operator may perform operation to switch from the first state to the second state about once a week to observe the condition inside the duct D.

If there are no abnormalities in the image data or the temperature data also in the second state, it returns to the first state to continue the operation. If there is an abnormality, for example, if the image data shows a large amount of oil adhered or a large amount of flue gas inside the duct D, or if the temperature data indicates that the temperature of the duct D is extremely higher than normal, then cleaning or internal inspection of the duct D is carried out.

In the first state, the lens of the monitoring unit 7 is housed in the guide tube 5 and does not come into contact with the flue gas flowing inside the duct D. Accordingly, there is no possibility of dirt such as oil adhering to the lens of the monitoring unit 7 except in the second state in which the lens of the monitoring unit 7 comes into contact with the flue gas flowing inside the duct D. Even if dirt adheres to the lens of the monitoring unit 7 in the second state, the end of the guide tube 5 removes the dirt of the lens off to eliminate the same at the time of housing the monitoring unit 7 into the guide tube 5.

Further, in the first state, the monitoring unit 7 is housed in the non-flammable metallic guide tube 5. Accordingly, even if a malfunction occurs in the IC chip of the monitoring unit 7 to cause a spark due to a short circuit or to burn the circuit board, a fire will not break out inside the duct D due to the ignition of oily dirt adhering to the side surface D1 in the duct D and so on.

Further as illustrated in FIG. 1, the length of the rod part 6b of the heat shielding portion 6 is set at a value corresponding to a plurality of times the diameter of the monitoring unit 7. Thereby, the monitoring unit 7, which causes a fire in the closed-space monitoring device 1, is sufficiently far away from flammable points such as dirt in the duct D. Therefore, the fire does not spread from the monitoring unit 7, as the fire origin, to the dirt in the duct D, which achieves even greater safety.

### Second Example

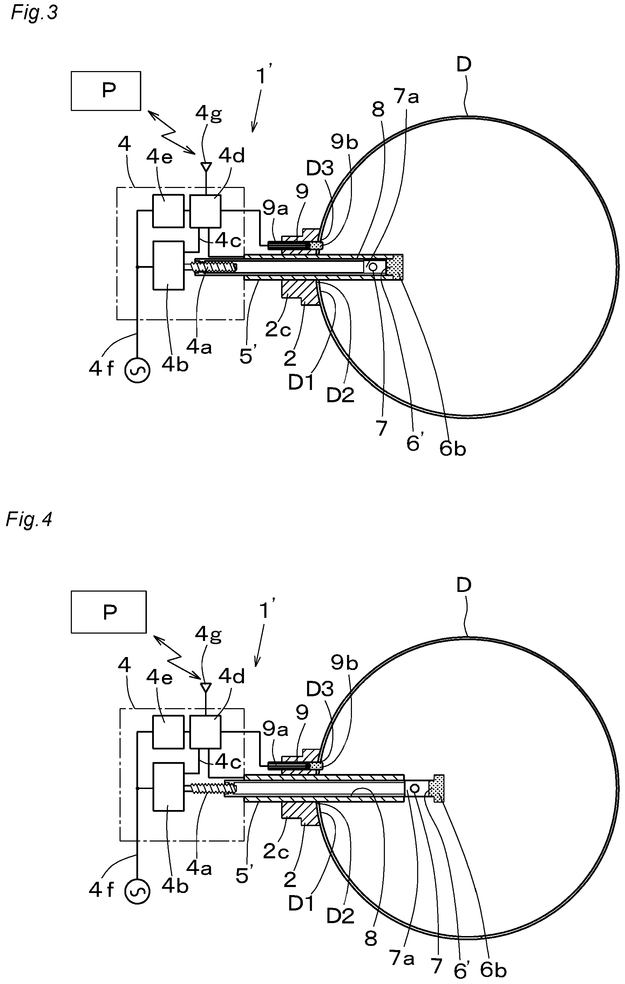

FIGS. 3 and 4 are diagrams each illustrating a configuration according to the second example, and the same reference numerals as those in the first example indicate the same members.

FIG. 3 is a diagram illustrating a configuration of a closed-space monitoring device 1' installed for the duct D. FIG. 4 is a diagram illustrating a configuration with the monitoring unit 7 of the closed-space monitoring device 1' advanced into the duct D from a guide tube 5'.

In the closed-space monitoring device 1 of the first example, in the first state illustrated in FIG. 1 in which the heat shielding portion 6 seals the end of the guide tube 5 to form a hermetically sealed state, an end surface of the head 6a of the heat shielding portion 6 that hermetically seals the insertion hole D2 is flush with the inner surface of the side surface portion D1.

In contrast, according to the second example, in the first state in which the device is not driven, the guide tube 5' is in a state of protruding into the duct D, i.e., a state is set in which the monitoring unit 7 is disposed, inside the duct D, at a position corresponding to approximately one-third of the inner diameter of the duct D.

The length of a heat shielding portion 6' is set to be sufficiently shorter than the length of the heat shielding portion 6 of the first example. This is because the position of the monitoring unit 7 in the second state illustrated in FIG. 4 is inside the duct D, and therefore, the distance that the monitoring unit 7 advances from the guide tube 5' can be made shorter.

In the second example, the guide tube 5' is made of the same material as that of the heat shielding portions 6 and 6', and similarly to the heat shielding portions 6 and 6', heat is blocked from being conducted to the monitoring unit 7. In addition, increasing the thickness of the guide tube 5' appropriately can block more heat.

The operation and use of the closed-space monitoring device 1' in the second example is almost the same as those of the closed-space monitoring device 1 in the first example. In the closed-space monitoring device 1' in the second example also, the monitoring unit 7 is housed in the guide tube 5' in the first state. Therefore, dirt such as oil does not adhere to the lens of the monitoring unit 7.

Further, in the closed-space monitoring devices 1 and 1' of the first and second examples, the heat shielding portions 6 and 6' are provided in the monitoring unit 7. Thereby, damage to the monitoring unit 7 due to heating in the event of a fire and so on is prevented, and even if a fire breaks out in the monitoring unit 7, dirt in the duct D does not catch fire and a fire does not break out inside the duct D.

### Reference Signs List

- 1, 1': Closed-space monitoring device
- 2: Retaining portion
- 2a: Through hole
- 3: Body
- 4: Control unit
- 4a: Worm gear
- 4c: Drive unit
- 4d: Signal line
- 4e: Processing circuit unit
- 5, 5': Guide tube
- 6, 6': Heat shielding portion
- 7: Monitoring unit
- 8: Movable tube
- 9: Temperature measurement unit
- D: Duct
- D1: Side surface
- D2: Insertion hole
- D3: Secondary insertion hole
- P: External device

## Claims

1. A closed-space monitoring device (1) comprising:
a retaining portion (2) that is fixed to an outer surface of a tube wall forming a closed space and has a through hole (2a) communicating with an insertion hole (D2) formed on the tube wall;
a body (3) fixed to the retaining portion; and
a control unit (4) coupled to a rear end of the body,
wherein
the body includes a guide tube (5) that communicates with the insertion hole and is fixed in close contact with the through hole, a monitoring unit (7) that is slidable inside the guide tube along a longitudinal direction of the guide tube, and a heat shielding portion (6) that is connected to a front side of the monitoring unit and slides inside the guide tube together with the monitoring unit to seal an end of the guide tube,
the control unit includes a drive unit (4b) that moves the monitoring unit and a processing circuit unit that controls the drive unit to acquire image data from the monitoring unit, and
the processing circuit unit controls the drive unit to move the monitoring unit and the heat shielding portion from a first state in which the heat shielding portion seals the end of the guide tube to shield the monitoring unit from heat to a second state in which the monitoring unit advances from the guide tube toward the closed space.

2. The closed-space monitoring device according to claim 1, wherein, in the first state, an end surface of the heat shielding portion is flush with an inner surface of the tube wall.

3. The closed-space monitoring device according to claim 1 or 2, wherein the processing circuit unit transmits the image data to an external device (P).

4. The closed-space monitoring device according to claim 1 or 2, wherein
the retaining portion is provided with a secondary through hole different from the through hole, and the tube wall is provided with a secondary insertion hole (D3) different from the insertion hole, and
a temperature measurement unit (9) that measures a temperature inside the closed space to transmit temperature data to the processing circuit unit is provided in the body with the temperature measurement unit inserted into the secondary through hole and the secondary insertion hole.

5. The closed-space monitoring device according to claim 4, wherein, in a case where the temperature data by the temperature measurement unit in the first state shows an abnormal value, the processing circuit unit controls the drive unit to move the monitoring unit to the second state to acquire image data.

## Patentansprüche

1. Überwachungsvorrichtung (1) im geschlossenen Raum, umfassend:
einen Halteabschnitt (2), der an einer äußeren Oberfläche einer Rohrwand befestigt ist, die einen geschlossenen Raum bildet, und ein Durchgangsloch (2a) aufweist, das mit einem an der Rohrwand gebildeten Einführungsloch (D2) in Verbindung steht;
einen am Halteabschnitt befestigten Körper (3); und
einer Steuereinheit (4), die mit dem hinteren Ende der Karosserie gekoppelt ist, wobei
der Körper ein Führungsrohr (5), das mit dem Einführungsloch in Verbindung steht und in engem Kontakt mit dem Durchgangsloch befestigt ist, eine Überwachungseinheit (7), die innerhalb des Führungsrohrs entlang dessen Längsrichtung verschiebbar ist, und einen Wärmeabschirmungsabschnitt (6), der mit einer Vorderseite der Überwachungseinheit verbunden ist und sich zusammen mit der Überwachungseinheit innerhalb des Führungsrohrs verschiebt, um ein Ende des Führungsrohrs abzudichten, beinhaltet,
die Steuereinheit eine Antriebseinheit (4b), die die Überwachungseinheit bewegt, und eine Verarbeitungsschaltungseinheit, die die Antriebseinheit steuert, um Bilddaten von der Überwachungseinheit zu erfassen, beinhaltet und
die Verarbeitungsschaltungseinheit die Antriebseinheit steuert, um die Überwachungseinheit und den Wärmeabschirmungsabschnitt von einem ersten Zustand, in dem der Wärmeabschirmungsabschnitt das Ende des Führungsrohrs abdichtet, um die Überwachungseinheit vor Wärme zu schützen, in einen zweiten Zustand zu bewegen, in dem sich die Überwachungseinheit aus dem Führungsrohr in Richtung des geschlossenen Raums bewegt.

2. Überwachungsvorrichtung im geschlossenen Raum nach Anspruch 1, wobei in dem ersten Zustand eine Endoberfläche des Wärmeabschirmungsabschnitt bündig mit einer inneren Oberfläche der Rohrwand ist.

3. Überwachungsvorrichtung im geschlossenen Raum nach Anspruch 1 oder 2, wobei die Verarbeitungsschaltungseinheit die Bilddaten an eine externe Vorrichtung (P) überträgt.

4. Überwachungsvorrichtung im geschlossenen Raum nach Anspruch 1 oder 2, wobei
der Halteabschnitt mit einem von dem Durchgangsloch verschiedenen sekundären Durchgangsloch bereitgestellt ist und die Rohrwand mit einem von dem Einführungsloch verschiedenen sekundären Einführungsloch (D3) bereitgestellt ist, und
eine Temperaturmesseinheit (9), die die Temperatur im Inneren des geschlossenen Raums misst, um Temperaturdaten an die Verarbeitungsschaltungseinheit zu übertragen, in dem Körper bereitgestellt ist, wobei die Temperaturmesseinheit in das sekundäre Durchgangsloch und das sekundäre Einführungsloch eingesetzt ist.

5. Überwachungsvorrichtung im geschlossenen Raum nach Anspruch 4, wobei in einem Fall, in dem die von der Temperaturmesseinheit im ersten Zustand erfassten Temperaturdaten einen abnormalen Wert aufweisen, die Verarbeitungsschaltungseinheit die Antriebseinheit steuert, um die Überwachungseinheit in den zweiten Zustand zu bewegen, um Bilddaten zu erfassen.

## Revendications

1. Dispositif de surveillance d'espace fermé (1) comprenant :
une partie de retenue (2) qui est fixée à une surface extérieure d'une paroi de tube formant un espace fermé et qui présente un orifice traversant (2a) communiquant avec un orifice d'insertion (D2) formé dans la paroi de tube ;
un corps (3) fixé à la partie de retenue ; et
une unité de commande (4) couplée à l'extrémité arrière du corps, dans lequel
le corps comporte un tube de guidage (5) qui communique avec l'orifice d'insertion et est fixé en contact étroit avec l'orifice traversant, une unité de surveillance (7) qui peut coulisser à l'intérieur du tube de guidage selon une direction longitudinale du tube de guidage, et une partie de protection thermique (6) qui est reliée à la face avant de l'unité de surveillance et qui coulisse à l'intérieur du tube de guidage avec l'unité de surveillance pour obturer une extrémité du tube de guidage,
l'unité de commande comporte une unité d'entraînement (4b) qui déplace l'unité de surveillance et une unité de circuit de traitement qui commande l'unité d'entraînement pour acquérir des données d'image à partir de l'unité de surveillance, et
l'unité de circuit de traitement commande l'unité d'entraînement pour déplacer l'unité de surveillance et la partie de protection thermique d'un premier état dans lequel la partie de protection thermique obture l'extrémité du tube de guidage pour protéger l'unité de surveillance de la chaleur, vers un second état dans lequel l'unité de surveillance sort du tube de guidage et avance vers l'espace fermé.

2. Dispositif de surveillance d'espace fermé selon la revendication 1, dans lequel, dans le premier état, une surface d'extrémité de la partie de protection thermique est affleurante avec une surface intérieure de la paroi de tube.

3. Dispositif de surveillance d'espace fermé selon la revendication 1 ou 2, dans lequel l'unité de circuit de traitement transmet les données d'image à un dispositif externe (P) .

4. Dispositif de surveillance d'espace fermé selon la revendication 1 ou 2, dans lequel
la partie de retenue est pourvue d'un orifice traversant secondaire différent de l'orifice traversant principal, et la paroi de tube est pourvue d'un orifice d'insertion secondaire (D3) différent de l'orifice d'insertion principal, et
une unité de mesure de température (9) qui mesure une température à l'intérieur de l'espace fermé pour transmettre des données de température à l'unité de circuit de traitement est pourvue dans le corps avec l'unité de mesure de température insérée dans l'orifice traversant secondaire et l'orifice d'insertion secondaire.

5. Dispositif de surveillance d'espace fermé selon la revendication 4, dans lequel, dans le cas où les données de température de l'unité de mesure de température dans le premier état montrent une valeur anormale, l'unité de circuit de traitement commande l'unité d'entraînement pour déplacer l'unité de surveillance vers le second état pour acquérir des données d'image.
